# EUROPÄISCHE PATENTSCHRIFT

(11) **EP 1 316 001 B1**
(45) Veröffentlichungstag und Bekanntmachung des Hinweises auf die Patenterteilung: **15.06.2005**
(21) Anmeldenummer: 01956530.8
(22) Anmeldetag: 12.07.2001
(51) Int. Cl.: G05B 19/042

(54) **SERVICESYSTEM FÜR STEUERGERÄTE VON HYDROSTATISCHEN ANTRIEBEN**
MAINTENANCE SYSTEM FOR CONTROL DEVICES OF HYDROSTATIC DRIVES
SYSTEME DE MAINTENANCE DESTINE A DES APPAREILS DE COMMANDE DE TRANSMISSIONS HYDROSTATIQUES

(30) Priorität: 08.09.2000 DE 10044501; 02.11.2000 DE 10054249
(43) Veröffentlichungstag der Anmeldung: 04.06.2003
(73) Patentinhaber: Brueninghaus Hydromatik GmbH, 89275 Elchingen (DE)
(72) Erfinder: VONNOE, Reinhard, 89264 Weissenhorn (DE); KRUMMENÖHLER, Uwe, 77815 Bühl (DE)
(74) Vertreter: Körfer, Thomas, Dipl.-Phys.
(86) Internationale Anmeldenummer: PCT/EP2001/008081
(87) Internationale Veröffentlichungsnummer: WO 2002/021224

(56) Entgegenhaltungen:
- EP-A- 0 390 666
- EP-A- 0 986 239
- DE-A- 4 037 351
- DE-U- 29 721 840
- US-A- 5 333 785

## Beschreibung

Die Erfindung geht aus von einer Servicesystem nach der Gattung des Hauptanspruchs.

Servicesysteme für Steuergeräte von hydrostatischen Antrieben sind bekannt. Sie bestehen aus einem Steuergerät mit einer Steuereinheit und einem Servicegerät. Zum Datenaustausch verfügen sowohl das Steuergerät als auch das Servicegerät über eine Schnittstelle. Durch Kabel mit entsprechenden Steckverbindern werden die Geräte miteinander verbunden. Der Datentransfer kann sowohl von dem Steuergerät zu dem Servicegerät als auch in umgekehrter Richtung erfolgen. Dies geschieht z. B. über eine RS232 Schnittstelle. Durch die Verbindung des Steuergeräts mit einem Servicegerät ist es so z.B. möglich, Fehlermeldungen oder Prozeßdaten auszugeben oder für eine spätere Auswertung in einem Speicher abzulegen. Von dem Servicegerät aus können umgekehrt der Steuereinheit neue Parameter übergeben werden. Dazu verfügt das Servicegerät über ein geeignetes Eingabegerät, z.B. eine Tastatur. Als Servicegerät wird entweder eine eigens zur Kommunikation mit dem Steuergerät entwickelte Bedienbox oder ein Laptop verwendet.

Nachteilig an dem genannten Servicesystem ist die Datenübertragung über Kabel, die über Steckverbindungen mit dem Steuergerät und dem Servicegerät verbunden sind. Die häufigste Fehlerquelle bei der Datenübertragung liegt in der verwendeten Steckverbindung. So kann Korrosion der Kontakte zu einer fehlerhaften Übertragung von Daten und damit zu einem Ausfall des Servicesystems führen. Besonders bei mobilen Arbeitsmaschinen ist das Risiko von Verschmutzung an den Steckkontakten groß, wodurch es wegen Kontaktschwierigkeiten ebenfalls zu Fehlern bei der Übermittlung von Daten kommen kann.

Weiterhin nachteilig ist der finanzielle Aufwand, der zur Installation eines geeigneten Steckverbinders notwendig ist. Zu den Kosten für die Diagnosebuchse selbst addiert sich die Mehrarbeit für die Verlegung an eine leicht zugängliche Stelle. Speziell für mobile Arbeitsmaschinen sind die Anforderungen an die Steckverbindungen hinsichtlich der Vermeidung von Beschädigung und Verschmutzung hoch.

Ferner ist der Bediener durch die Kabelverbindung der Geräte in seiner Bewegungsfreiheit eingeschränkt.

Aus der EP 0 986 239 A2 ist ein Eingabesystem zur Eingabe von Prozessparametern bekannt. Mit Hilfe des Eingabesystem können beispielsweise Parameter einer Heizungs- oder Klimaanlage verändert werden. Die Eingabe erfolgt dabei entweder indem das Eingabegerät mit einer Regeleinrichtung über ein Kabel verbunden wird oder aber indem das Eingabegerät mit dem Steuergerät über ein Funktelefonnetz verbunden wird. Eine direkte Funkverbindung zwischen einem Servicegerät und einem Steuergerät erfolgt dagegen nicht.

Aus der DE 40 37 351 A1 ist weiterhin ein System bekannt, bei dem mittels einer gemeinsanen Bedieneinrichtung mehrere Sterilisierungsautomaten eines Labors angesteuert werden können. Die Sterilisierungsautomaten sind so aufeinander abgestimmt, dass sie gemeinsam einen Gerätesatz bilden, der über die Bedieneinrichtung fernbedienbar ist. Eine einheitliche Bedienung und Kommunikation der Bedieneinrichtung mit mehreren, unterschiedlichen Gerätetypen ist dagegen nicht vorgesehen.

Ein drahtloses Bussystem zum Einsatz in stationären Steuerungsanlagen ist außerdem der EP 0 940 783 A2 bekannt. Die in einer Produktionsanlage verteilt angeordnete Vielzahl von Sensoren und Stellgliedern werden von einer gemeinsamen Steuerung über ein Steuergerät aus einem Kontrollraum heraus bedient. Die Überwachung oder Betätigung der Sensoren oder Stellglieder erfolgt von dem Steuergerät über ein Bussystem. Dabei kann zur Erweiterung eines drahtgebundenen Bussystems zusätzlich eine Funkverbindung aufgebaut werden, wobei diese Funkverbindung mittelbar über ein weiteres Bussystem die Kommunikation mit einem einzelnen Bauteil ermöglicht. Das redundante Funksystem ermöglicht jedoch keine Fehleranalyse in dem drahtgebundenen Netz.

Ein einfaches System zur Wartung von Türschlusssystemen ist aus der DE 196 50 569 A1 bekannt. Die den einzelnen Türen jeweils zugeordneten Steuergeräte werden mit einem gemeinsamen Modemadapter verbunden. An dem Modemadapter ist eine Schnittstelle ausgebildet, welche ein Gerät zur Datenübertragung aufnehmen kann. Ein solches Gerät kann z. B. ein von einem Benutzer eingesetztes Mobiltelefon sein. Durch die Nutzung eines Mobiltelefons wird eine Verbindung zu einer Servicezentrale aufgebaut, wobei ein Mobilfunknetz verwendet wird. Eine Integration einer Übertragungseinrichtung zum Aufau einer direkten Funkverbindung in jedes einzelne Steuergerät der Türen ist dagegen nicht vorgesehen. Der Aufbau einer Verbindung über ein Mobilfunknetz dient nur der Vorbereitung der eigentlichen Servicemaßnahme. Die Übertragung von neuen Parametern an die Steuergeräte der Türen erfolgt dagegen direkt durch einen Servicetechniker an dem Modemadapter.

Der Erfindung liegt die Aufgabe zugrunde, ein Servicesystem mit besserer Handhabbarkeit und höherer Bedienfreundlichkeit zu schaffen.

Die Aufgabe wird durch die kennzeichnenden Merkmale des Anspruchs 1 in Verbindung mit den gattungsbildenden Merkmalen gelöst. Das erfindungsgemäße Servicesystem hat den Vorteil, daß die Übertragungstechnik seitens des Steuergeräts in das Steuergerät integriert ist und daß durch die Übertragung der Daten drahtlos durch Funk auf eine Verbindung von Steuergerät und Servicegerät mittels Kabel verzichtet werden kann. Dadurch können auch die Steckverbindungen entfallen, wodurch die Ausfallsicherheit des Systems wesentlich erhöht wird.

Zudem ist eine Kosteneinsparung durch den Entfall der Steckverbinder möglich. Neben den Kosten für die Bauteile betrifft dies auch die Installation, z.B. der Diagnosebuchse.

Die Bedienung des Servicegeräts ohne Kabelverbindung erhöht zudem den Bedienkomfort, da der Bediener sich frei innerhalb der Reichweite der Funkverbindung bewegen kann. Bei Funktionsüberprüfungen ist zudem der Gewinn an Sicherheit für das Bedienpersonal vorteilhaft. Der Bediener kann sich innerhalb der Reichweite der Funkverbindung aufhalten, sich gleichzeitig aber außerhalb des Arbeitsbereichs der Maschine befinden.

Vorteilhafte Weiterbildungen des erfindungsgemäßen Servicesystems mit den kennzeichnenden Merkmalen des Hauptanspruchs sind durch die in den Unteransprüchen angegebenen kennzeichnenden Merkmale möglich.

Durch die vollständige Integration der Übertragungstechnik in dem Gehäuse des Steuergeräts einerseits und des Servicegeräts andererseits, ist auch unter schwierigen Einsatzbedingungen eine zuverlässige Datenübertragung möglich. Die Möglichkeit der Beschädigung eines Kontaktes ist ausgeschlossen, was besonders bei den langen Einsatzdauern von Arbeitsmaschinen vorteilhaft ist.

Die Integration der Sende-/Empfangseinrichtung z.B. in eine Laptop macht den Verzicht auf zusätzliche Geräte möglich, woraus eine zusätzliche Kostenreduzierung folgt.

Ausführungsbeispiele der Erfindung sind in der Zeichnung vereinfacht dargestellt und in der nachfolgenden Beschreibung näher erläutert. Es zeigen:
- Fig. 1: eine schematische Darstellung eines ersten Ausführungsbeispiels einer erfindungsgemäßen Servicesystems;
- Fig. 2: ein Blockschaltbild des ersten Ausführungsbeispiels eines erfindungsgemäßen Servicesystems und
- Fig. 3: ein Blockschaltbild eines zweiten Ausführungsbeispiels eines erfindungsgemäßen Servicesystems.

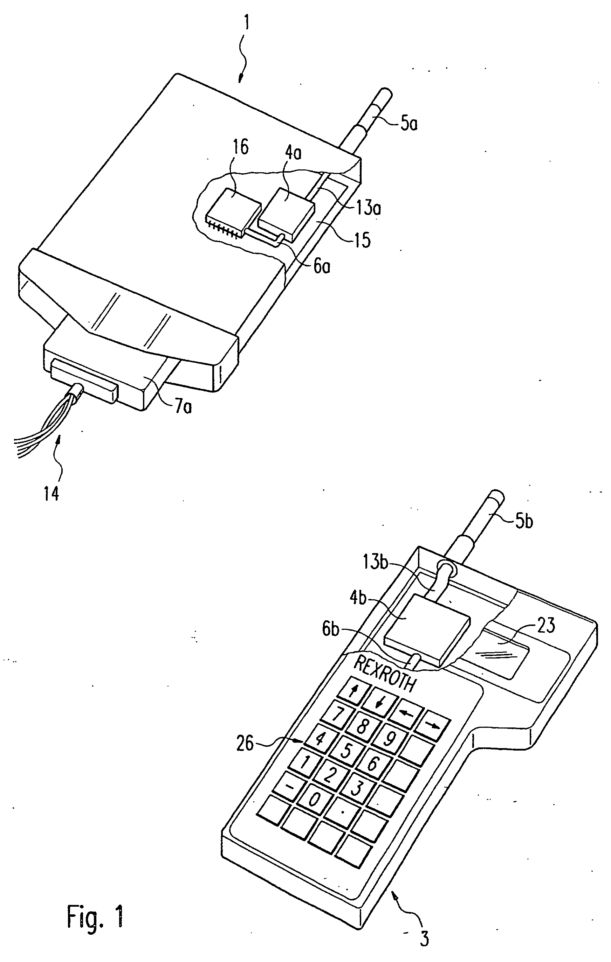

In Fig. 1 ist der prinzipielle Aufbau eines erfindungsgemäßen Servicesystems dargestellt. Dabei ist eine Steuereinheit 16 eines Steuergeräts 1, z.B. einer nicht dargestellten mobilen Arbeitsmaschine, über eine Datenleitung 6a mit einer Sende- und Empfangseinheit 4a verbunden, an welche mittels eines Antennenkabels 13a eine Antenne 5a angeschlossen ist. Die verwendete Datenleitung 6a zwischen Steuereinheit 16 und Sende/Empfangseinheit 4a kann z.B. eine Leiterbahn auf einer Leiterplatte 15 des Steuergeräts 1 sein.

Das Servicegerät, im dargestellten Ausführungsbeispiel eine Bedienbox 3, ist über eine weitere Datenleitung 6b mit einer zweiten Sende- und Empfangseinheit 4b verbunden, die wiederum über ein Antennenkabel 13b an eine Antenne 5b angeschlossen ist. Die Datenübertragung zwischen der Steuereinheit 16 des Steuergeräts 1 und der Bedienbox 3 erfolgt durch Funkübertragung zwischen den beiden Sende- und Empfangseinheiten 4a, 4b.

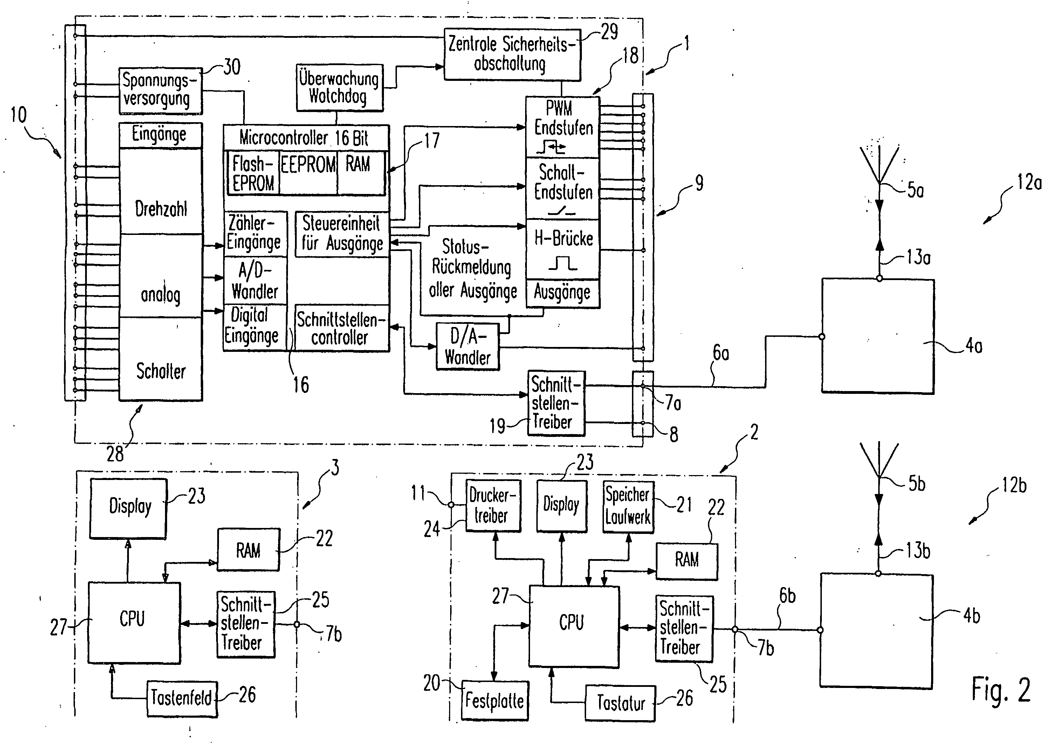

In Fig. 2 ist der Aufbau der Servicesystem als Blockschaltbild dargestellt. Das Steuergerät 1 besitzt mehrere Anschlüsse, die auf den jeweiligen Einsatzzweck abgestimmt sind. Im dargestellten Beispiel sind dies vier Eingänge für die Signale von Drehzahlsensoren, sechs Eingänge für Potentiometer und weitere sechs programmierbare Schalteingänge. Die Kontaktierung der Eingangskanäle 28 wird über eine Steckverbindung 10 durchgeführt. Ausgangsseitig sind sechs Proportionalmagnete sowie drei Ausgänge für Schaltmagnete, Relais, o.ä. vorgesehen. Darüber hinaus ist ein weiterer Ausgang für einen Stellmotor und ein analoger Ausgang vorhanden, z.B. mit einer Spannung von Null bis fünf Volt. Die Verbindung der Ausgänge mit den einzelnen Verbrauchern erfolgt über eine zweite Steckverbindung 9. Alternativ können die Ein- und Ausgänge auch in einer einzigen gemeinsamen Steckverbindung angeordnet sein, wie in Fig. 1 dargestellt.

Die von den nicht dargestellten Drehzahlsensoren und den nicht dargestellten Potentiometern eingangsseitig anliegenden Meß- und Steuersignale werden ebenso wie die Schalterstellungen der nicht dargestellten Schalter erfaßt und in der Steuereinheit 16 des Steuergeräts 1 verarbeitet. Dies geschieht über ein Programm, daß in einem Speicher 17 der Steuereinheit 16 abgelegt ist. Ebenfalls in einem Teil des Speichers 17 der Steuereinheit 16 sind systemspezifische Parameter abgelegt. Diese Parameter können von dem Servicegerät neu in den Speicher 17 geschrieben werden. Damit ist eine Anpassung z. B. an veränderte Einsatzbedingungen möglich.

Die von den Programm der Steuereinheit 16 errechneten Steuergrößen werden an die Endstufen 18 der Ausgänge übermittelt und in entsprechende leistungsgerechte Ausgangsgrößen umgesetzt. Der Status der Ausgänge, die über die Steckverbindung 9 von den nicht dargestellten Verbrauchern kontaktiert werden, wird der Steuereinheit 16 zurückgemeldet. Bei Fehlfunktionen kann das System über eine zentrale Sicherheitsabschaltung 29 stillgelegt werden.

Zur Kommunikation mit anderen Geräten, z.B. der Steuerelektronik eines Dieselmotors, verfügt das Steuergerät 1 über einen bidirektionalen Anschluß 8, der eine Integration in einen nicht dargestellten CAN-Bus ermöglicht und der über einen Schnittstellentreiber 19 angesteuert wird. Ebenfalls über den Schnittstellentreiber 19 wird die Sende/Empfangseinheit 4a angesteuert. Die Verbindung erfolgt über die Steckverbindung 7a und die Datenleitung 6a. Die Sende-/Empfangseinheit 4a ist mittels Antennenkabel 13a mit einer Antenne 5a verbunden.

Auf gleiche Art ist in einem kommunizierenden Servicegerät, das z. B. eine Bedienbox 3 oder ein Laptop 2 sein kann, eine Sende-/Empfangseinheit mittels einer weiteren Datenleitung 6b und Steckverbindung 7b ebenso wie eine weitere Antenne 5b über ein Antennenkabel 13b mit der zweiten Sende-/Empfangseinrichtung 4b verbunden.

Die weitere Beschreibung bezieht sich auf die Verwendung eines Laptops 2 als Servicegerät. Der Einsatz einer speziell zu Servicezwecken entwickelten Bedienbox 3 erfolgt dementsprechend, weswegen auf eine spezielle Beschreibung verzichtet wird.

Auf dem Laptop 2 ist eine auf die Steuereinheit 16 abgestimmte Software installiert. Ein als Teil des Speichers 17 der Steuereinheit 16 in das Steuergerät 1 integrierter Fehlerspeicher kann so ausgelesen werden und auf einer Festplatte 20 oder einem anderen Speicher 21 des Laptops 2 gespeichert werden. Eine direkte Ausgabe auf einem Display 23 ist ebenso möglich, wie der Ausdruck der Information über einen nicht dargestellten Drucker, der über eine Steckverbindung 11 und einen entsprechenden Schnittstellentreiber 24 mit dem Prozessor 27 in Verbindung steht.

Durch Umkehrung der Richtung der Datenübertragung ist eine Anpassung der Parameter, mit denen das Programm des Steuereinheit 16 arbeitet möglich. Hierzu kann einerseits eine direkte Eingabe über die Tastatur des Laptops 2 erfolgen oder ein vorgefertigter Datensatz von einem der Speichermedien des Laptops 2 übersendet werden.

Am Beispiel einer Datenübertragung des Fehlerspeichers an das Laptop 2 soll die Arbeitsweise des Servicesystem im Detail erläutert werden.

Die zu übermittelnden Daten des Fehlerspeichers werden von einem Schnittstellentreiber 19 an die erste Sende/Empfangseinheit 4a geleitet. Dort werden sie in Funksignale umgewandelt, die über das Antennenkabel 13a an die erste Antenne 5a geleitet werden, von der sie abgestrahlt werden. Von der zweiten Antenne 5b wird das Funksignal aufgenommen und an die zweite Sende/Empfangseinheit 4b weitergeleitet. Das Funksignal wird von der Sende-/Empfangseinheit 4b wieder in Daten umgewandelt und über eine Steckverbindung 7b und mit der zweiten Sende-/Empfangseinheit 4b korrespondierenden Schnittstellentreiber 25 an den Prozessor 27 des Laptops 2 weitergeleitet. Das System ist bidirektional, so daß die Übermittlung von Daten von dem Laptop 2 an das Steuergerät 1 in umgekehrter Richtung dementsprechend abläuft.

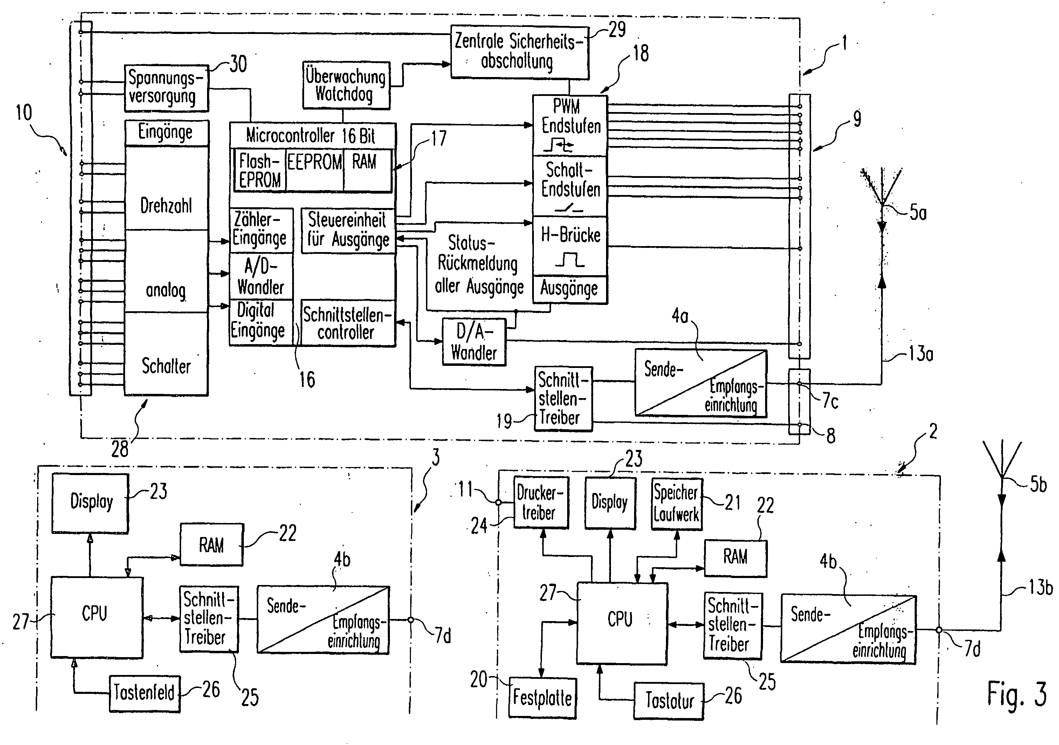

In Fig. 3 ist ein zweites Ausführungsbeispiel dargestellt. Die erste Sende-/Empfangseinheit 4a ist in das Gehäuse des Steuergeräts 1 integriert. Die Kontaktierung der ersten Antenne 5a erfolgt über eine von außen an dem Gehäuse des Steuergeräts 1 zugängliche Steckverbindung 7c. Die erste Sende-/Empfangseinheit 4a ist vorzugsweise direkt mit der Steuereinheit 16 verbunden. Dazu ist die erste Sende/Empfangseinheit 4a z.B. auf der Leiterplatte 15 des Steuergeräts 1 integriert. Die Anordnung der Sende/Empfangseinheit 4a auf einer Hilfsleiterplatte ist ebenso denkbar, wobei die Kontaktierung der Hilfsleiterplatte mit der Leiterplatte 15 der Steuereinheit 16 z.B. als Steckkartensystem ausgeführt ist.

Auf Seiten des Laptops 2 wird die zweite Sende/Empfangseinheit 4b ebenfalls im Inneren des Geräts integriert. Die Integration kann dabei ebenso wie bei dem Steuergerät 1 durch Anordnung der zweiten Sende/Empfangseinheit 4b auf einer gemeinsamen Leiterplatte oder einer Hilfsleiterplatte, die mit der Leiterplatte des Prozessors 27 z.B. durch Steckverbindung verbunden ist, erfolgen. Die Anordnung der Sende-/Empfangseinheit 4b kann z.B. als Steckkarte ausgeführt sein und über einen von der Gehäuseaußenseite zugänglichen Steckkontakt 7d mit der zweiten Antenne 5b verbindbar sein.

Die Sende-/Empfangseinheiten 4a, 4b können auch mitsamt der jeweiligen Antennen 5a, 5b im Inneren des Steuergeräts 1 bzw. Servicegeräts angeordnet sein. Die Sende-/Empfangseinheiten 4a, 4b werden zusammen mit den Antennen 5a, 5b in dem Gehäuse des Steuergeräts 1, bzw. des Laptops 2 untergebracht. Die Anbindung der Sende/Empfangseinheiten 4a, 4b erfolgt dabei wie zu Fig.2 erläutert. Die Antennen 5a, 5b sind vorzugsweise ebenfalls direkt auf den Leiterplatten angeordnet.

Als Servicegerät ist auch der Einsatz eines nicht dargestellten Mobilfunkgeräts möglich. Beispielsweise können dadurch die von dem Steuergerät ausgelesenen Daten zu einer zentralen Bearbeitungsstelle weitergeleitet werden. Dort werden die Daten auf einem Rechner von Mitarbeitern ausgewertet. Als Resultat einer solchen zentralen Auswertung können z. B. angepaßte Parametersätze an das Mobilfunkgerät zurückgesendet werden, die von dem Mobilfunkgerät an das Steuergerät 1 weitergeleitet werden. Servicearbeiten, die von einem Mitarbeiter im mobilen Einsatz nicht alleine lösbar sind, können jedoch durch die Mithilfe von Innendienstmitarbeitern durchgeführt werden.

## Patentansprüche

1. Servicesystem für ein Steuergerät (1) von hydrostatischen Antrieben, mit einer über eine Datenleitung (6a) mit einer Steuereinheit (16) des Steuergeräts (1) verbundenen ersten Schnittstelle (12a) zur bidirektionalen Datenübertragung und einem Servicegerät (3) mit einer über eine Datenleitung (6b) mit dem Servicegerät verbundenen zweiten Schnittstelle (12b) zur bidirektionalen Datenübertragung,
**dadurch gekennzeichnet,**
**daß** die erste Sende-/Empfangseinrichtung (4a) in das Steuergerät (1) integriert ist, und
**daß** die erste und die zweite Schnittstelle (12a, 12b) jeweils eine Sende-/Empfangseinrichtung (4a, 4b) und eine Antenne (5a, 5b) aufweisen und die Datenübertragung zwischen der ersten und der zweiten Schnittstelle (12a, 12b) direkt, drahtlos über Funk erfolgt.

2. Servicesystem nach Anspruch 1,
**dadurch gekennzeichnet,**
**daß** die zweite Sende-/Empfangseinrichtung (4b) in dem Servicegerät (3) angeordnet ist.

3. Servicesystem nach Anspruch 1 oder 2,
**dadurch gekennzeichnet,**
**daß** die Antenne (5a) in dem Gehäuse des Steuergeräts (1) angeordnet ist.

4. Servicesystem nach Anspruch 2,
**dadurch gekennzeichnet,**
**daß** die Antenne (5b) in dem Gehäuse des Servicegeräts (3) angeordnet ist.

5. Servicesystem nach einem der Ansprüche 1 bis 4,
**dadurch gekennzeichnet,**
**daß** die erste Schnittstelle eine RS 232-Schnitttelle oder eine CAN-Bus-Schnittstelle ist.

## Claims

1. Maintenance system for a control device (1) of hydrostatic drives with a first interface (12a) for bi-directional data transmission connected via a data line (6a) with a control unit (16) of the control device (1), and a maintenance device (3) with a second interface (12b) for bi-directional data transmission connected via a data line (6b) with the maintenance device, **characterised in that** the first transmitter/receiver (4a) is integrated in the control device (1), and the first and second interfaces (12a, 12b) each have a transmitter/receiver (4a, 4b) and an antenna (5a, 5b) and the data transmission between the first and the second interfaces (12a, 12b) takes place directly wireless by radio.

2. Maintenance system according to claim 1, **characterised in that** the second transmitter/receiver (4b) is arranged in the maintenance device (3).

3. Maintenance system according to claim 1 or 2, **characterised in that** the antenna (5a) is arranged in the housing of the control device (1).

4. Maintenance system according to claim 2, **characterised in that** the antenna (5b) is arranged in the housing of the maintenance device (3).

5. Maintenance system according to any of claims 1 to 4, **characterised in that** the first interface is an RS 232 or a CAN-bus interface.

## Revendications

1. Système de maintenance pour un appareil de commande (1) de dispositifs d'entraînement hydrostatiques, comportant une première interface (12a) reliée par l'intermédiaire d'une ligne de transmission de données (6a) à une unité de commande (16) de l'appareil de commande (1), pour la transmission bidirectionnelle de données et un appareil de maintenance (3) comportant une seconde interface (12b) reliée par l'intermédiaire d'une ligne de transmission de données (6b) à l'appareil de maintenance pour une transmission bidirectionnelle de données,
**caractérisé en ce**
**que** le premier dispositif d'émission/réception (4a) est intégré dans l'appareil de commande (1), et
les première et seconde interfaces (12a,12b) possèdent respectivement un dispositif d'émission/réception (4a,4b) et une antenne (5a,5b), et la transmission de données s'effectue directement, sans fil, par radio entre les première et seconde interfaces (12a,12b).

2. Système de maintenance selon la revendication 1, **caractérisé en ce que** le second dispositif d'émission/réception (4b) est disposé dans un appareil de maintenance (3).

3. Système de maintenance selon la revendication 1 ou 2, **caractérisé en ce que** l'antenne (5a) est disposée dans le boîtier de l'appareil de commande (1).

4. Système de maintenance selon la revendication 2, **caractérisé en ce que** l'antenne (5b) est disposée dans le boîtier de l'appareil de maintenance (3).

5. Système de maintenance selon l'une des revendications 1 à 4, **caractérisé en ce que** la première interface est une interface RS 232 ou une interface de bus CAN.
